# EUROPÄISCHE PATENTANMELDUNG

(11) **EP 0 997 366 A1**
(43) Veröffentlichungstag der Anmeldung: **03.05.2000**
(21) Anmeldenummer: 99120878.6
(22) Anmeldetag: 27.10.1999
(51) Int. Cl.: B62B 3/18, B62B 3/02

(54) **Fahrrahmen**

(30) Priorität: 29.10.1998 DE 19849843
(71) Anmelder: WANZL METALLWARENFABRIK GMBH, D-89336 Leipheim (DE)
(72) Erfinder: Heinisch, Klaus, 86513 Ursberg (DE)

(57) **Zusammenfassung**

Die Erfindung betrifft einen Fahrrahmen (1) für ein Transportgerät, mit einem Grundrahmen (2), der zum Tragen weiterer Bauelemente des Transportgerätes bestimmt ist, wobei der Grundrahmen (2) ein Querstück (3) sowie zwei Seitenstücke (12) aufweist und wobei die Seitenstücke (12) mit dem Querstück (3) über je ein um eine senkrechte Achse (13) verschwenkbares Gelenk (4) verbunden sind.

Die Erfindung zeichnet sich dadurch aus, dass jedes Gelenk (4) zwei Gelenkhälften (5) aufweist, die mit einer horizontal angeordneten Verzahnung (9) ausgestattet sind und dass die Gelenkhälften (5) mit Hilfe der Verzahnungen (9) in einer sich gegenseitig arretierenden Weise verbunden sind.

## Beschreibung

Die Erfindung betrifft einen Fahrrahmen für ein Transportgerät, mit einem Grundrahmen, der zum Tragen weiterer Bauelemente des Transportgerätes bestimmt ist, wobei der Grundrahmen ein Querstück sowie zwei Seitenstücke aufweist und wobei die Seitenstücke mit dem Querstück über je ein um eine senkrechte Achse verschwenkbares Gelenk verbunden sind.

Die internationale Patentanmeldung WO 81/01820 zeigt einen Fahrrahmen dieser Gattung. Der Fahrrahmen trägt Bauelemente, die zusammen mit dem Fahrrahmen ein containerartiges Transportgerät entstehen lassen. Will man mehrere solcher Transportgeräte platzsparend ineinanderschieben, sind die Bauelemente in eine den Ineinanderschiebevorgang nicht behindernde Lage zu bringen und die beiden Seitenstücke nach außen zu spreizen. Die beiden Gelenke ermöglichen diesen Spreizvorgang.

Es sind Fahrrahmen für ähnliche Transportgeräte bekannt, die keine Gelenke aufweisen. Bei diesen Fahrrahmen sind die Seitenstücke so an das Querstück angeschweißt, dass diese Anordnung von oben betrachtet an die geometrische Form eines Trapezes erinnert, dessen längere parallele Seite fehlt. Mit solchen Fahrrahmen ausgestattete Transportgeräte lassen sich im Leerzustand ebenfalls platzsparend ineinanderschieben, wobei zuvor die weiteren Bauelemente ebenfalls in eine den Ineinanderschiebevorgang nicht behindernde Lage zu bringen sind.

Zwei ineinandergeschobene Transportgeräte lassen einen sogenannten 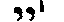 Stapelabstand" entstehen. Auf die beiden Fahrrahmen bezogen ist dies z.B. der Abstand zwischen den Querstücken der beiden Fahrrahmen, die engstmöglich ineinandergeschoben sind. Die Größe des Stapelabstandes und die Größe der stumpfen Winkel, die zwischen den beiden Seitenstücken und dem Querstück gebildet werden, hängt besonders von der Dicke des Querschnittes der Seitenstücke ab. Ein Fahrrahmen, dessen Seitenstücke und dessen Querstück beispielsweise aus je einem hochkant gestellten Flachstahl gebildet sind, lässt sich mit einem gleichgestalteten weiteren Fahrrahmen enger ineinanderschieben als Fahrrahmen, deren Seitenstücke und Querstück beispielsweise aus Rohren hergestellt sind.

Die Anforderungen, die an Transportgeräte gestellt werden, welche mit einem eingangs genannten Fahrrahmen ausgestattet sind, sind unterschiedlich. Der Markt verlangt z.B. Transportgeräte gleicher Breite, jedoch mit unterschiedlicher Länge. Fertigt man Fahrrahmen, deren Seitenstücke, wie eingangs erwähnt, mit dem Querstück verschweisst sind, entstehen bei Transportgeräten unterschiedlicher Länge auch Fahrrahmen mit verschiedenen Längen. Dies bedeutet wiederum, dass die Gehrungswinkel, die beim Schneiden der Seitenstücke und des Querstückes zu wählen sind, unterschiedlich groß sind. Diese Verschiedenartigkeit erweist sich bei einer Massenfertigung von Fahrrahmen als nicht zu unterschätzender Unkostenfaktor. Es entstehen Unkosten durch die verschiedenen Fertigungsweisen, durch Umstellungszeiten beim Einrichten der Fertigungsmaschinen und Vorrichtungen und bei der Lagerhaltung.

Es ist Aufgabe der Erfindung, einen gattungsgemäßen Fahrrahmen so zu verbessern, dass sich die eben genannten Nachteile zumindest reduzieren, bevorzugt jedoch ganz vermeiden lassen wobei der Fahrrahmen die Vorteile eines fest verschweissten Fahrrahmens besitzen soll.

Die Lösung der Aufgabe besteht darin, dass jedes Gelenk zwei Gelenkhälften aufweist, die mit einer horizontal angeordneten Verzahnung ausgestattet sind und dass die Gelenkhälften mit Hilfe der Verzahnungen in einer sich gegenseitig arretierenden Weise verbunden sind.

Die vorgeschlagene Lösung lässt Fahrrahmen entstehen, deren Seitenstücke und deren Querstück nicht mehr auf Gehrung geschnitten werden müssen. Dies ist fertigungstechnisch betrachtet ein enormer Vorteil. Durch die Verwendung von Verzahnungen an den Gelenkhälften lassen sich die Seitenstücke in vielen unterschiedlich stumpfen Winkeln mit dem Querstück verbinden. Stattet man die Gelenkhälften mit je einem zentral angeordneten Durchbruch aus, so können die Gelenkhälften mit nur einer einzigen Schraube gegenseitig verspannt werden, so dass ein Fahrrahmen gebildet ist, der die Vorteile eines fest verschweißten Fahrrahmens aufweist. Eine vorteilhafte Weiterentwicklung der Erfindung besteht darin, wenn an die Unterseite einer unten angeordneten Gelenkhälfte eine Fahrrolle angeordnet wird und die beiden Gelenkhälften und die Fahrrolle mit ebenfalls nur einer einzigen Schraube miteinander befestigt werden können. Weitere Vorteile finden sich in der nachfolgenden Beschreibung.

Die Erfindung wird anhand von Ausführungsbeispielen näher erläutert. Es zeigt
- Fig. 1: einen Fahrrahmen;
- Fig. 2: zwei Gelenkhälften;
- Fig. 3: einen Schnitt durch ein Gelenk mit einem Teil des Querstückes und des Seitenstückes sowie
- Fig. 4: ein Gelenk mit daran angeordneter Fahrrolle.

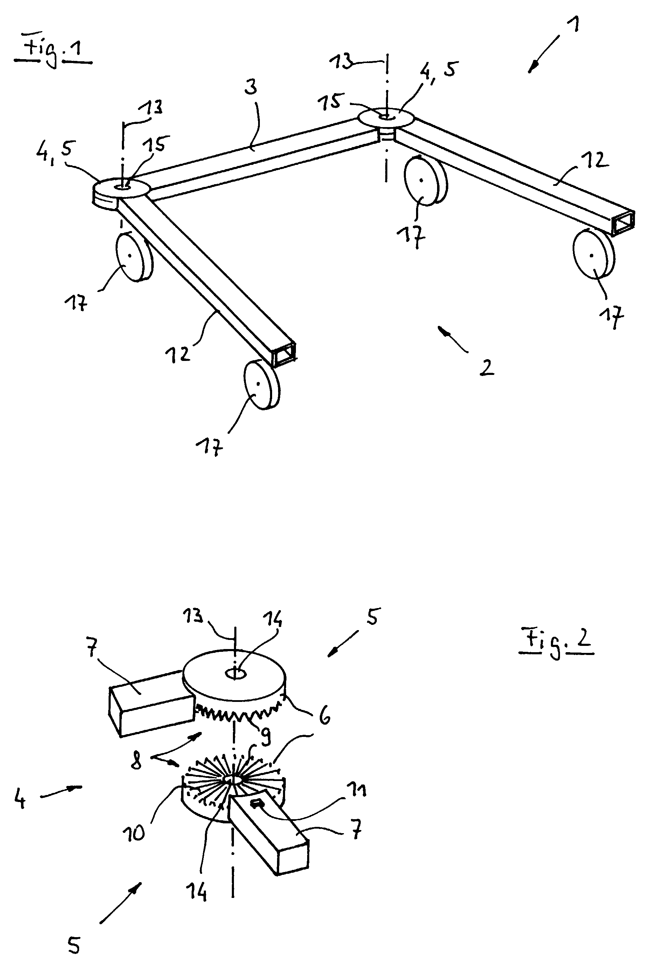

Fig. 1 zeigt einen Fahrrahmen 1 für ein nicht näher dargestelltes Transportgerät. Der Fahrrahmen 1 weist einen Grundrahmen 2 auf, der zum Tragen weiterer, in der Zeichnung nicht dargestellter Bauelemente des Transportgerätes bestimmt ist. Solche Bauelemente können z.B. nach oben gerichtete Stützen, Träger oder Wände sein; je nachdem welche Funktionen das Transportgerät zu erfüllen hat. Zum Grundrahmen 2 gehören ein Querstück 3, zwei Gelenke 4 und zwei Seitenstücke 12. Jedes Gelenk 4 besteht aus zwei Gelenkhälften 5. Das Querstück 3 trägt an seinen beiden Enden je eine Gelenkhälfte 5, während an einem Ende der Seitenstücke 12 die jeweils andere Gelenkhälfte 5 angeordnet ist. Die paarweise angeordneten Gelenkhälften 5 sind jeweils auf einer senkrechten Achse 13 angeordnet. Die senkrechten Achsen 13 werden durch Schraubmittel 15 mit Muttern (z.B. Sechskantschrauben oder Bundbolzen mit Gewinde) gebildet, die zum ortsfesten Verspannen oder Arretieren der Gelenkhälften 5 bestimmt sind. Der Grundrahmen 2 trägt vier Fahrrollen 17, so dass in dieser Minimalausführung der Fahrrahmen 1 bereits gebildet ist.

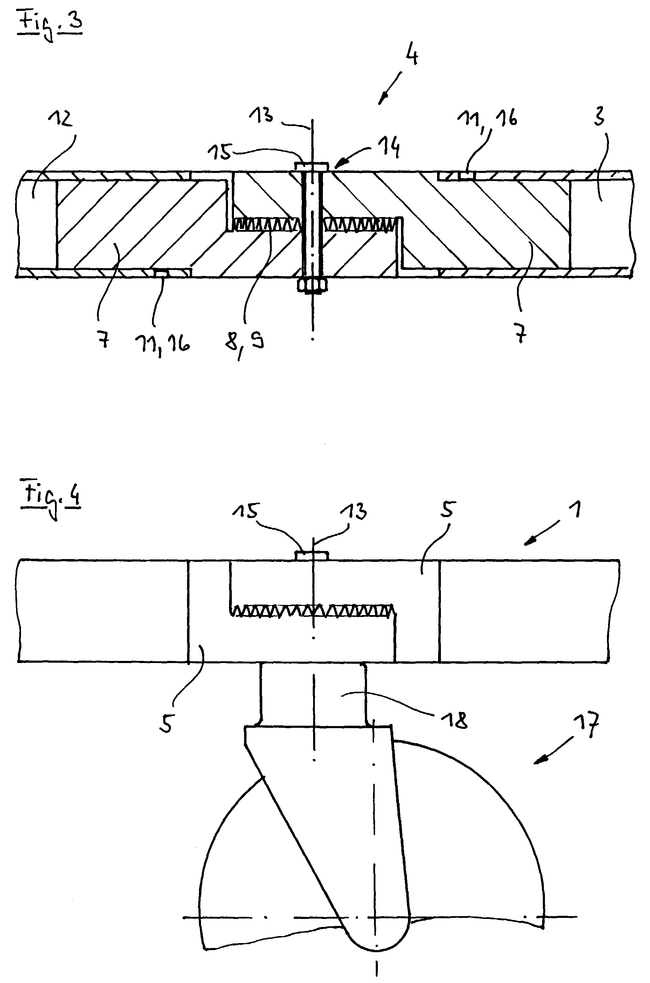

In einer räumlichen Darstellung zeigt Fig. 2 die beiden Gelenkhälften 5 eines Gelenkes 4. Die Gelenkhälften 5 sind gleich gestaltet, so dass es unerheblich ist, welche der beiden Gelenkhälften 5 oben oder unten angeordnet ist. Jede Gelenkhälfte 5 weist einen Gelenkabschnitt 6 und einen Befestigungsabschnitt 7 auf. Der Gelenkabschnitt 6 ist kreis- oder scheibenförmig gestaltet und weist an einer der beiden horizontal angeordneten kreisförmigen Flächen 8 eine kreisförmig gestaltete, horizontal angeordnete Verzahnung 9 auf, so dass die einzelnen Zahnrücken 10, radial angeordnet, zur senkrechten Achse 13 weisen. Am Gelenkabschnitt 6 ist der Befestigungsabschnitt 7 angeformt, dessen Querschnitt dem jeweils inneren Querschnitt eines rohrförmigen Seitenstückes 12 angepasst ist. Im Beispiel besitzt dieser Querschnitt eine rechteckige Form. An einer der Seitenflächen des Befestigungsabschnittes 7 kann ein kleiner Vorsprung 11 vorgesehen sein, dessen Bedeutung in Fig. 3 näher beschrieben wird. Der Gelenkabschnitt 6 ist zentrisch mit einem Durchbruch 14 versehen, der auf der senkrechten Achse 13 angeordnet ist. Setzt man die beiden Gelenkhälften 5 so aufeinander, dass die beiden kreisförmigen Flächen 8, welche die Verzahnung 9 aufweisen, aufeinander liegen, greifen die Zähne dieser Flächen 8 ineinander, so dass sich die Gelenkhälften 5 gegenseitig arretieren. Die Gelenkhälften 5 können in dieser Lage nicht um die gemeinsame Achse 13 gedreht werden.

Fig. 3 zeigt in einer Schnittdarstellung ein Gelenk 4 und Abschnitte des Querstückes 3 und eines Seitenstückes 12. Die Verzahnungen 9 der kreisförmigen Flächen 8 greifen ineinander. Durch ein auf der senkrechten Achse 13 angeordnetes, durch die Durchbrüche 14 hindurchführendes Schraubmittel 15 mit Mutter werden die Gelenkhälften 5 gegeneinandergepresst und ortsfest arretiert. Die Befestigungsabschnitte 7 reichen in das rohrförmige Querstück 3 und in das rohrförmige Seitenstück 12 hinein. Das Querstück 3 weist für jede Gelenkhälfte 5 einen kleinen Durchbruch 16 auf, in welche je ein Vorsprung 11 eingreift. Gleiches ist auch an den beiden Seitenstücken 12 vorgesehen. Vorsprünge 11 und Durchbrüche 16 sind bei der Montage des Fahrrahmens 1 von Nutzen.

Fig. 4 zeigt eine weitere zweckmäßige Ausbildung des Fahrrahmens 1. Hier dient das auf der senkrechten Achse 13 gelegene Schraubmittel 15 nicht nur dazu, die beiden Gelenkhälften 5 ortsfest zu arretieren, sondern das Schraubmittel 15 führt nach unten weiter in den Kopf 18 einer Fahrrolle 17, so dass diese an die Unterseite des Gelenkes 4 angeschraubt ist. Das Befestigungsmittel 15 erfüllt demnach zwei Funktionen.

Durch die Verwendung der eben beschriebenen Gelenke 4 lassen sich Fahrrahmen 1 herstellen, bei denen die Seitenstücke 12 in unterschiedlichen Winkeln zum Querstück 3 an diesem befestigt sind. Bei gleich langen Seitenstücken 12 lassen sich somit unterschiedliche Fahrrahmen 1 herstellen. Querstück 3 und Seitenstücke 12 brauchen nicht mehr auf Gehrung geschnitten werden.

## Patentansprüche

1. Fahrrahmen (1) für ein Transportgerät, mit einem Grundrahmen (2), der zum Tragen weiterer Bauelemente des Transportgerätes bestimmt ist, wobei der Grundrahmen (2) ein Querstück (3) sowie zwei Seitenstücke (12) aufweist und wobei die Seitenstücke (12) mit dem Querstück (3) über je ein um eine senkrechte Achse (13) verschwenkbares Gelenk (4) verbunden sind, dadurch **gekennzeichnet,** dass jedes Gelenk (4) zwei Gelenkhälften (5) aufweist, die mit einer horizontal angeordneten Verzahnung (9) ausgestattet sind und dass die Gelenkhälften (5) mit Hilfe der Verzahnungen (9) in einer sich gegenseitig arretierenden Weise verbunden sind.

2. Fahrrahmen nach Anspruch 1, dadurch **gekennzeichnet,** dass jede Gelenkhälfte (5) einen zentral angeordneten, auf der senkrechten Achse (13) gelegenen Durchbruch (14) aufweist.

3. Fahrrahmen nach Anspruch 1 oder 2, dadurch **gekennzeichnet,** dass die Verzahnung (9) auf einem Gelenkabschnitt (6) angeordnet ist, an den sich ein Befestigungsabschnitt (7) anschließt, der zum Befestigen am Querstück (3) oder an einem Seitenstück (12) bestimmt ist.

4. Fahrrahmen nach Anspruch 3, dadurch **gekennzeichnet,** dass jeder Gelenkabschnitt (7) kreis- oder scheibenförmig gestaltet ist.

5. Fahrrahmen nach einem der Ansprüche 1 bis 4, dadurch **gekennzeichnet,** dass an jedem Befestigungsabschnitt (7) ein Vorsprung (11) angeordnet ist, der zum Eingreifen in einen am Querstück (3) oder an einem Seitenstück (12) befindlichen Durchbruch (16) bestimmt ist.

6. Fahrrahmen nach einem der Ansprüche 1 bis 5, dadurch **gekennzeichnet,** dass die Gelenkhälften (5) durch ein auf der senkrechten Achse (13) befindliches Schraubmittel (15) ortsfest zusammengehalten sind.

7. Fahrrahmen nach einem der Ansprüche 1 bis 6, dadurch **gekennzeichnet,** dass die Gelenkhälften (5) gleich gestaltet sind.

8. Fahrrahmen nach einem der Ansprüche 1 bis 7, dadurch **gekennzeichnet,** dass an jedem Gelenk (4) eine Fahrrolle (17) mit Hilfe der Schraubmittel (15) befestigt ist.

9. Fahrrahmen nach einem der Ansprüche 1 bis 8, dadurch **gekennzeichnet,** dass die Seitenstücke (12) in verschiedenen Winkeln zum Querstück (3) an diesem ortsfest befestigbar sind.
